# EUROPÄISCHE PATENTSCHRIFT

(11) **EP 0 795 220 B1**
(45) Veröffentlichungstag und Bekanntmachung des Hinweises auf die Patenterteilung: **17.06.1998**
(21) Anmeldenummer: 95940121.7
(22) Anmeldetag: 24.11.1995
(51) Int. Cl.: H02G 5/06

(54) **GEKAPSELTE ELEKTRISCHE HOCHSPANNUNGSLEITUNG**
ENCLOSED HIGH-VOLTAGE ELECTRICAL LINE
LIGNE ELECTRIQUE HAUTE TENSION ENTIEREMENT BLINDEE

(30) Priorität: 01.12.1994 DE 4444554
(43) Veröffentlichungstag der Anmeldung: 17.09.1997
(73) Patentinhaber: SIEMENS AKTIENGESELLSCHAFT, 80333 München (DE)
(72) Erfinder: MEINHERZ, Manfred, D-13467 Berlin (DE); LORENZ, Dieter, D-12207 Berlin (DE)
(86) Internationale Anmeldenummer: DE9501703
(87) Internationale Veröffentlichungsnummer: WO9617422

(56) Entgegenhaltungen:
- DE-A- 3 141 437
- FR-A- 852 037
- US-A- 4 364 171

## Beschreibung

Die Erfindung bezieht sich auf eine gekapselte elektrische Hochspannungsleitung mit einem elektrischen Hochspannungsleiter, der innerhalb einer Kapselung mittels eines oder mehrerer Stützelemente mit jeweils wenigstens einem Isolierstoffteil abgestützt ist, und der wenigstens eine Bohrung zur Aufnahme eines Endes eines Stützelementes aufweist, wobei wenigstens ein Stützelement eine metallische Hülse aufweist, die die Bohrung wenigstens teilweise durchsetzt, im Bereich des Randes der Bohrung abgestützt ist, einen Teil des Isolierstoffteils umgibt und in ihrem Inneren einen Anschlag bildet, der eine Verschiebung des Isolierstoffteils in die Bohrung hinein begrenzt, und wobei die Hülse jeweils zylindrisch ausgebildet ist, einen aus der äußeren Oberfläche des Hochspannungsleiters herausragenden Teil des Isolierstoffkörpers teilweise umgibt und dort eine Feldsteuerelektrode aufweist, die das jeweilige Isolierstoffteil konzentrisch umgibt.

Aus der US-Patentschrift 2,280,200 ist eine elektrische Koaxialleitung bekannt, bei der der innere Leiter jeweils einander diametral gegenüberliegende Paare von Bohrungen aufweist, in die Isolierstoffstützer eingeschoben sind, welche sich an der Innenwand einer Kapselung abstützen und somit den Leiter koaxial zur Kapselung fixieren.

Aus der US-Patentschrift 3,344,370 ist es ebenfalls bekannt, einen Leiter innerhalb einer Kapselung mittels isolierender Stützer zu fixieren, wobei dort bei der Würdigung des Standes der Technik erwähnt ist, daß die über den Leiter hinausragenden Enden der Isolierstoffstützer jeweils von einer Hülse umgeben sein können, um den Abstand zwischen dem Leiter und der Kapselung festzulegen.

Aus der DE-PS 31 41 437 ist es bekannt einen Hochspannungsleiter mit Stützelementen zu versehen, die hochspannungsseitig jeweils eine metallische Einlage aufweisen, in die je eine den Hochspannungsleiter durchsetzende Schraube eingreift. An dem anderen Ende des jeweiligen Stützelementes ist ein elektrisch leitender, an der Kapselungswand gleitender Fuß vorgesehen.

Aus der US-Patentschrift 2,207,522 ist eine Koaxialleitung bekannt, bei der säulenförmige Isolierstoffteile in Hülsen gefaßt sind, die auch Feldelektroden bilden und bei der zwischen den Hülsen und den Isolierstoffteilen jeweils ein Spalt vorgesehen ist, der mit einem Zement gefüllt wird.

Der vorliegenden Erfindung liegt die Aufgabe zugrunde, eine Hochspannungsleitung der eingangs genannten Art besonders hochspannungsfest, montagefreundlich und kostengünstig auszubilden und eine lange Standzeit zu garantieren.

Die Aufgabe wird erfindungsgemäß dadurch gelost, daß die Hülse an dem Isolierstoffteil teilweise direkt anliegt und im Bereich der Feldsteuerelektrode erweitert ist, so daß die Feldsteuerelektrode das Isolierstoffteil mit Abstand umgibt.

Durch die erfindungsgemäße Konstruktion ist erreicht, daß das Isolierstoffteil jeweils in dem Bereich, in dem es die Bohrung des Hochspannungsleiters durchsetzt, durch eine Hülse geschützt ist und sich auch im Inneren dieser Hülse abstützt, so daß die Hülse die Stützkraft des Isolators auf den Hochspannungsleiter überträgt.

Dadurch ist auch gewährleistet, daß das Isolierstoffteil sich nicht direkt an den Hochspannungsleiter abstützt, wie dies beispielsweise gemäß der US-PS 2,280,200 der Fall ist. Ein solcher Bereich, in dem sich das Isolierstoffteil an dem Hochspannungsleiter abstützt und entsprechend hohen mechanischen Belastungen ausgesetzt ist, sollte nicht zusätzlich noch dielektrischen Belastungen ausgesetzt sein.

Durch die vorliegende Erfindung ist der Bereich, in dem das Isolierstoffteil des Stützelementes abgestützt ist, innerhalb der metallischen Hülse und somit in einem feldfreien Raum angeordnet. Die metallische Hülse ist ihrerseits im Bereich des Randes der Bohrung an dem Hochspannungsleiter abgestützt.

Stützelemente können vor der Montage bereits zusammengesetzt werden, indem die Hülsen auf die Isolierstoffteile aufgeschoben werden. In dem Hochspannungsleiter müssen lediglich Bohrungen vorgesehen werden. Eine weitere Bearbeitung des Hochspannungsleiters ist nicht notwendig.

Die Stützelemente können zwischen dem Hochspannungsleiter und der Kapselung entlang der Hochspannungsleitung beispielsweise wendelförmig verteilt sein, es können jedoch auch mehrere Stützelemente in Axialrichtung der Hochspannungsleitung auf gleicher Höhe angeordnet sein, falls diese nicht zu weit in den Hochspannungsleiter hineinragen. Bei einer horizontalen Lage des Hochspannungsleiters kann es auch ausreichen, diesen lediglich nach unten hin gegen die Kapselungswand abzustützen.

Durch die erfindungsgemäße Gestaltung ist der Rand der Bohrung in dem Hochspannungsleiter dielektrisch abgeschirmt. Auch der Rand der Berührungsfläche zwischen dem Isolierstoffteil und der Hülse ist auf diese Weise abgeschirmt. Die Feldverteilung zwischen dem Hochspannungsleiter und der im Normalfall aus Metall bestehenden Kapselung wird durch die Feldsteuerelektrode derart vergleichmäßigt, daß keine Entladungen, insbesondere an den Stellen, an denen Bauteile mit unterschiedlichen Dielektrizitätskonstanten zusammentreffen, zu befürchten sind.

Das Isolierstoffteil ist innerhalb der Hülse abgestützt und insbesondere auch in vorteilhafter Weise seitlich geführt. Zu diesem Zweck liegt die Hülse am Umfang des Isolierstoffteils teilweise dicht an. Jedoch ist die Hülse im Bereich der Feldsteuerelektrode gegenüber dem Außendurchmesser des Isolierstoffteils erweitert, so daß diese beiden Teile des Stützelementes einander im Bereich der Feldsteuerelektrode nicht berühren. Die Berührungsfläche zwischen dem Isolierstoffteil und der Hülse beginnt somit erst in einem Bereich, der durch die Feldsteuerelektrode soweit abgeschirmt ist, daß er praktisch feldfrei ist, so daß sich keine dielektrische Belastung dieses Bereiches ergibt.

In diesem Bereich können sich beispielsweise auch Partikel ansammeln, die sich innerhalb des Kapselungsgehäuses befinden und die sich unter dem Einfluß einer Hochspannung bewegen konnten. Dieser Bereich bildet somit zusätzlich eine Teilchenfalle.

Eine weitere vorteilhafte Ausgestaltung der Erfindung sieht vor, daß der Hochspannungsleiter hohl ausgebildet ist und jeweils zwei diametral einander gegenüberliegende Bohrungen aufweist, und daß die jeweilige Hülse jeweils eine erste der Bohrungen durchsetzt und eine zweite Bohrung wenigstens teilweise durchsetzt.

Durch diese Gestaltung ist die jeweilige Hülse in dem Hochspannungsleiter besonders gut fixiert, so daß auf das Stützelement wirkende Seitenkräfte, beispielsweise bei einer thermischen Dehnung des Hochspannungsleiters und entsprechendem Gleiten des Stützelementes an der Kapselungswand besonders gut aufgenommen werden.

Die Hülse kann in diesem Fall beispielsweise so ausgebildet sein, daß sie im Bereich der zweiten Bohrung einen Boden aufweist, der diese nach außen hin in glatter Form abschließt, so daß sich eine dielektrisch günstige Gestaltung ergibt.

Es kann jedoch auch vorteilhaft vorgesehen sein, daß in diesem Fall die jeweils zweite Bohrung eine Sackbohrung ist.

Somit bleibt die äußere Oberfläche des Hochspannungsleiters im Bereich des zweiten Bohrung unversehrt.

Es kann vorteilhaft vorgesehen sein, daß der Anschlag jeweils durch einen Boden der Hülse gebildet ist.

In diesem Fall stützt sich das jeweilige Isolierstoffteil am Boden der Hülse ab. Hier steht eine besonders große Fläche zur Aufnahme der Stützkräfte zur Verfügung.

Eine weitere vorteilhafte Ausgestaltung der Erfindung sieht vor, daß das Isolierstoffteil am Boden der jeweiligen Hülse unter Zwischenlage eines Federelementes abgestützt ist.

Auf diese Weise können Toleranzen beim Bau und der Montage der Hochspannungsleitung ausgeglichen werden und es kann sichergestellt werden, daß alle Stützelemente fest an der Kapselungswand anliegen.

Es kann außerdem vorteilhaft vorgesehen sein, daß das der Kapselungswand zugewandte Ende des Stützelementes einen elektrisch leitenden, geerdeten Fuß aufweist, der gleitend an der Kapselungswand anliegt.

Dieser Fuß kann beispielsweise aus einer Kunststoffplatte, insbesondere aus PTFE bestehen, die in eine Ausnehmung des Isolierstoffteils eingedrückt und dort vorteilhafterweise hinter eine Hinterschneidung eingeschnappt ist und die außerdem, um sie elektrisch leitfähig zu machen, mit einem leitfähigen Material überzogen oder durchsetzt ist.

Es kann auch vorgesehen sein, daß die leitenden Füße verschiedener Stützelemente mittels eines geerdeten Leiters miteinander leitend verbunden sind.

Außerdem kann auch vorteilhaft vorgesehen sein, daß das Isolierstoffteil jeweils unter Zwischenlage eines Federelementes auf dem Fuß abgestützt ist.

Auch dies ist eine Möglichkeit, um das Anliegen der Stützelemente an der Kapselungswand sicherzustellen, da sich bei Ausbildung eines Spaltes ohne Berührung und leitende Verbindung in diesem Bereich eine hohe dielektrische Belastung ergeben würde.

Im folgenden wird die Erfindung anhand eines Ausführungsbeispiels in einer Zeichnung gezeigt und anschließend beschrieben.

Dabei zeigt
Figur 1 im Querschnitt eine Hochspannungsleitung mit drei Stützelementen,
Figur 2 eine Hochspannungsleitung mit zwei Stützelementen ausschnittsweise,
Figur 3 einen Teil einer Hochspannungsleitung mit einem Stützelement,
Figur 4 einen Teil einer Hochspannungsleitung im Querschnitt mit zwei Stützelementen,
Figur 5 ein Detail eines Stützelementes.

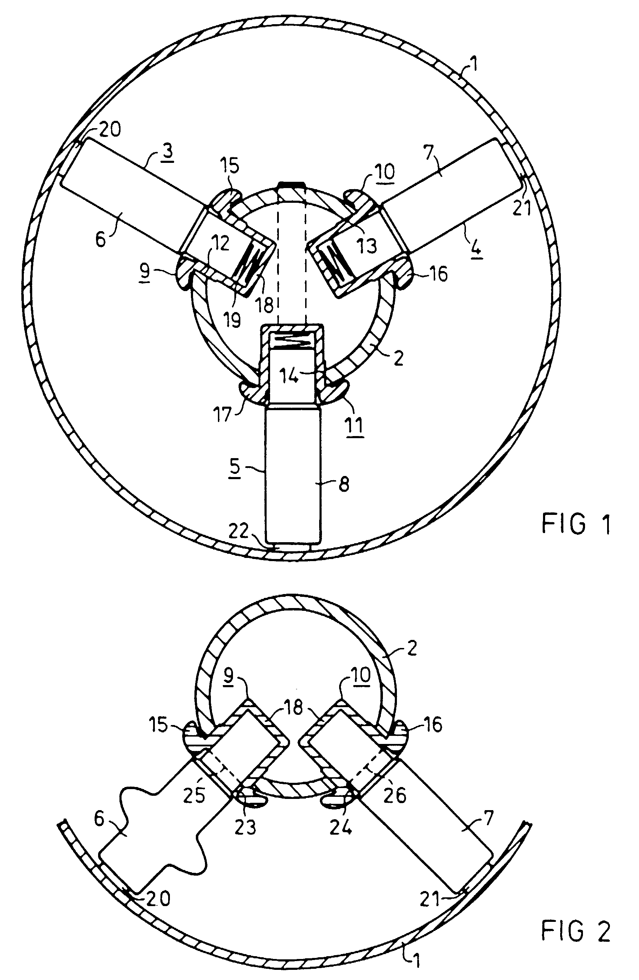

Die Figur 1 zeigt eine Hochspannungsleitung mit einer Kapselung 1 und einem Hochspannungsleiter 2, der innerhalb der Kapselung 1 konzentrisch und koaxial mittels der Stützelemente 3, 4, 5 fixiert ist. Die Stützelemente 3, 4, 5 können axial in Längsrichtung der Hochspannungsleitung gegeneinander versetzt oder auch auf derselben Hohe angeordnet sein.

Jedes der Stützelemente 3, 4, 5 weist ein Isolierstoffteil 6, 7, 8 auf, das stabförmig und zylindrisch ausgebildet ist. Außerdem weist jedes der Stützelemente 3, 4, 5 eine Hülse 9, 10, 11 aus Metall, insbesondere Aluminium auf, in die jeweils das dem Hochspannungsleiter 2 zugewandte Ende der Isolierstoffteile 6, 7, 8 eingeschoben ist.

Die eingeschobenen Enden der Isolierstoffteile 6, 7, 8 weisen jeweils einen geringeren Durchmesser auf als die freiliegenden Teile der Isolierstoffteile 6, 7, 8.

Die Hülsen 9, 10, 11 sind jeweils topfförmig und zylindrisch ausgebildet und in je eine Bohrung 12, 13, 14 des Hochspannungsleiters 2 eingeschoben. Dabei weist jede der Hülsen 9, 10, 11 eine Krempe auf, die als Feldelektrode 15, 16, 17 ausgebildet ist und die jeweils eines der Isolierstoffteile 6, 7, 8 konzentrisch mit Abstand umgibt.

Jede der Hülsen 9, 10, 11 weist als Anschlag für ein Isolierstoffteil 6, 7, 8 einen Boden 18 auf, an den das jeweilige Isolierstoffteil 6, 7, 8 unter Zwischenlage eines Federelementes 19 abgestützt ist.

Somit ist sichergestellt, daß jedes der Isolierstoffteile 6, 7, 8 mit seinem jeweiligen Fuß 20, 21, 22 gegen die Innenwand der Kapselung 1 gedrückt wird. Die Isolierstoffteile 6, 7, 8 sind in der jeweiligen Hülse 9, 10, 11 in axialer Richtung verschiebbar, jedoch seitlich geführt und gegen Verkippung geschützt.

Die Hülsen 9, 10, 11 sind soweit in die jeweiligen Bohrungen 12, 13, 14 des Hochspannungsleiters 2 eingeschoben, daß die Feldelektroden 15, 16, 17 auf der Oberfläche des Hochspannungsleiters 2 im Randbereich der Bohrungen 12, 13, 14 aufliegen und sich dort abstützen.

In der Figur 2 ist eine Variante der Erfindung dargestellt, bei der die Isolierstoffteile 6, 7 an dem einen Anschlag bildenden Boden 18 der jeweiligen Hülse 9, 10 ohne Zwischenlage eines Federelementes abgestützt sind. Dies ist beispielsweise dann vorteilhaft, wenn der Hochspannungsleiter 2 in horizontaler Richtung verläuft, so daß die Gewichtskraft des Hochspannungsleiters 2 ausreicht, um eine feste Anlage der Isolierstoffteile 6, 7 an der Wand der Kapselung 1 zu gewährleisten. Eine Abstützung des Hochspannungsleiters 2 nach oben kann in diesem Fall entbehrlich sein.

Durch die Ausbildung der Isolierstoffteile 6, 7 mit verringertem Durchmesser in dem in die jeweilige Hülse 9, 10 eingeschobenen Bereich und durch eine Ausnehmung in der jeweiligen Hülse 9, 10 an ihrer Innenseite im Bereich der Feldelektroden 15, 16 ist zwischen den Feldelektroden 15, 16 und den Isolierstoffteilen 6, 7 ein Raum 23, 24 geschaffen, der durch die Feldelektroden 15, 16 von dem zwischen dem Hochspannungsleiter 2 und der Kapselung 1 vorhandenen elektrischen Feld abgeschirmt ist und der als Teilchenfalle wirken kann. In diesem Bereich ist auch das Ende der Berührungsfläche zwischen der jeweiligen Hülse 9, 10 und dem zugehörigen Isolierstoffteil 6, 7 angeordnet. Es ergibt sich dort eine Linie 25, 26 am Umfang des Isolierstoffteils, die in der Figur 2 jeweils gestrichelt angedeutet ist und entlang deren die drei Medien: Metall (Hülse), Isolierstoff (Isolierstoffteil) sowie das den Hochspannungsleiter 2 umgebende Gas, beispielsweise SF₆, aufeinander treffen. Im Bereich dieser Trennungslinie ist die dielektrische Belastung besonders groß und daher ist es wichtig, daß diese Linie jeweils durch eine Feldelektrode abgeschirmt und durch die Ausnehmungen in den Feldelektroden bzw. die Gestaltung der Isolierstoffteile in einem Bereich hinter der Feldelektrode angeordnet ist.

Durch die Fassung der Isolierstoffteile 6, 7 in jeweils einer metallischen Hülse 9, 10 im Bereich der Bohrung 12, 13 in dem Hochspannungsleiter 2 ist das jeweilige Isolierstoffteil 6, 7 auch vor mechanischen Beschädigungen einerseits beim Einschieben in die Bohrungen und andererseits bei mechanischen Belastungen im Betrieb an dem bearbeitungsbedingt scharfen Rand der jeweiligen Bohrung in dem Hochspannungsleiter 2 geschützt.

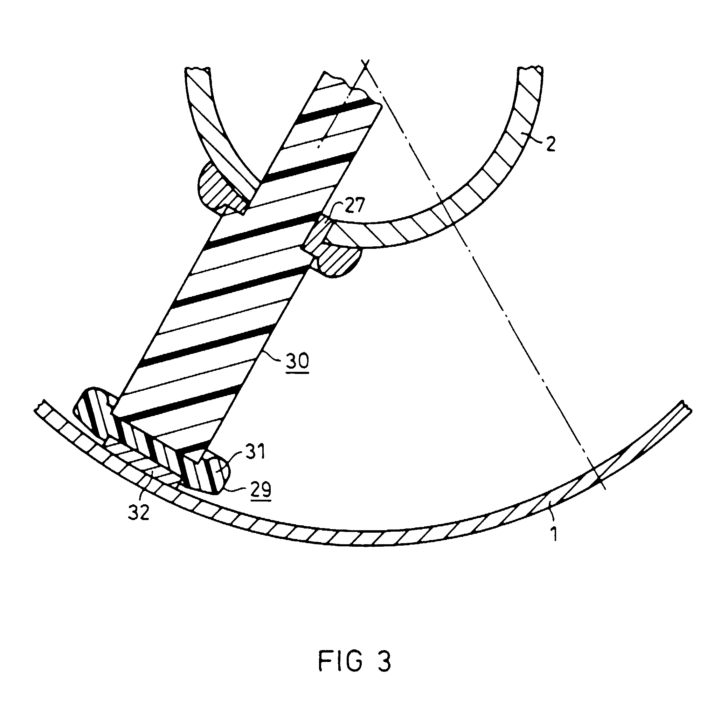

In der Figur 3 ist in einem Querschnitt dargestellt, daß die Hülse 27 ggf. auch nur teilweise in die Bohrung 28 hineinragen kann. Der Fuß 29 des Stützelementes 30 ist dort durch ein Isolierstoffteil 31 und ein in diesem federnd gelagertes elektrisch leitendes Gleitplättchen 32 gebildet.

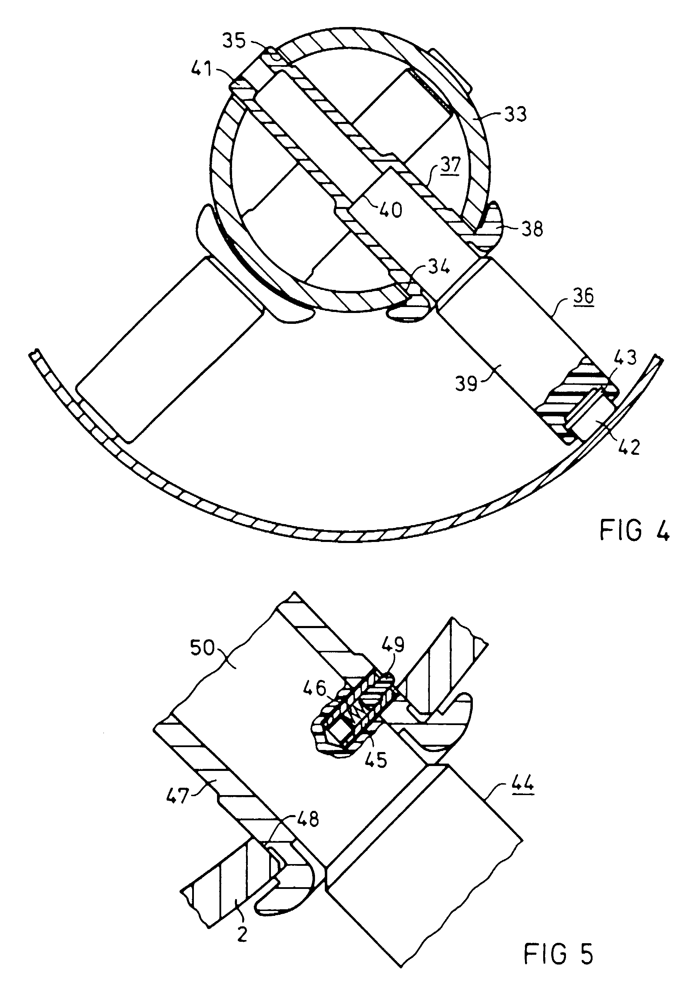

In der Figur 4 ist ein Hochspannungsleiter 33 dargestellt, der jeweils zwei diametral einander gegenüberliegende Bohrungen 34, 35 für jedes Stützelement 36 aufweist. Die Hülse 37 des Stützelementes 36 durchsetzt beide Bohrungen 34, 35 und liegt mit ihrer Feldelektrode 38 am Rand derjenigen Bohrung 34 auf, die von dem Isolierstoffteil 39 durchsetzt ist.

Die Hülse 37 weist einen Absatz 40 auf, der den Anschlag für das Isolierstoffteil 39 bildet.

Der Teil 41 der Hülse 37, der durch die nicht von dem Isolierstoffteil 39 durchsetzte Bohrung 35 hindurchragt, ist als Feldelektrode ausgebildet, die die Bohrung 35 in dem Hochspannungsleiter 2 dielektrisch abschirmt.

Der Fuß 42 des Stützelementes 36 ist als zylindrisches Kunststoffteil ausgebildet, das aus einem mit einem leitenden Werkstoff gefüllten Kunststoff, beispielsweise PTFE besteht und das eine Krempe 43 aufweist, die in eine Hinterschneidung des Isolierstoffteils 39 elastisch einschnappt und auf diese Weise befestigt ist.

In der Figur 5 ist eine Befestigungseinrichtung für ein Stützelement 44 dargestellt, das eine Führungshülse 45 und einen darin axial verschiebbaren, mittels einer Feder 46 federbelasteten Stift 49 aufweist.

Die Führungshülse 45 durchsetzt sowohl das Isolierstoffteil 50 des Stützelementes 44 als auch die Hülse 47 des Stützelementes 44 und legt diese beiden Teile somit gegeneinander fest. Der Stift 49 ist innerhalb der Führungshülse 45 soweit zurückschiebbar, daß er nicht über die Oberfläche der Hülse 47 hinausragt. Beim Einschieben der Hülse 47 in die Bohrung 48 des Hochspannungsleiters 2 schiebt sich der Stift 47 unter der Wirkung der Feder 46 nach dem Passieren der Bohrung 48 vor und rastet somit hinter der Kante der Bohrung 48 in dem Hochspannungsleiter 2 ein, wodurch ein Herausfallen des Stützelementes 44 aus der Bohrung 48 verhindert ist.

## Patentansprüche

1. Gekapselte elektrische Hochspannungsleitung mit einem elektrischen Hochspannungsleiter (2, 33), der innerhalb einer Kapselung mittels eines oder mehrerer Stützelemente (3, 4, 5, 30, 36, 44) mit jeweils wenigstens einem Isolierstoffteil (6, 7, 8, 31, 39, 50) abgestützt ist, und der wenigstens eine Bohrung zur Aufnahme eines Endes eines Stützelementes (3, 4, 5, 30, 36, 44) aufweist, wobei wenigstens ein Stützelement (3, 4, 5, 30, 36, 44) eine metallische Hülse (9, 10, 11, 27, 37, 47) aufweist, die die Bohrung (12, 13, 14, 28, 31, 35, 48) wenigstens teilweise durchsetzt, im Bereich des Randes der Bohrung (12, 13, 14, 28, 31, 35, 48) abgestützt ist, einen Teil des Isolierstoffteils (6, 7, 8, 31, 39, 50) umgibt und in ihrem Inneren einen Anschlag (40) bildet, der eine Verschiebung des Isolierstoffteils (6, 7, 8, 31, 39, 50) in die Bohrung (12, 13, 14, 28, 31, 35, 48) hinein begrenzt, und wobei die Hülse (9, 10, 11, 27, 37, 47) jeweils zylindrisch ausgebildet ist, einen aus der äußeren Oberfläche des Hochspannungsleiters (2, 33) herausragenden Teil des Isolierstoffkörpers (6, 7, 8, 31, 39, 50) teilweise umgibt und dort eine Feldsteuerelektrode (15, 16, 17, 38) aufweist, die das jeweilige Isolierstoffteil (6, 7, 8, 31, 39, 50) konzentrisch umgibt,
**dadurch gekennzeichnet**, daß die Hülse (9, 10, 11, 27, 37, 47) an dem Isolierstoffteil (6, 7, 8, 31, 39, 50) teilweise direkt anliegt und im Bereich der Feldsteuerelektrode (15, 16, 17, 38) erweitert ist, so daß die Feldsteuerelektrode (15, 16, 17, 38) das Isolierstoffteil (6, 7, 8, 31, 39, 50) mit Abstand umgibt.

2. Gekapselte elektrische Hochspannungsleitung nach Anspruch 1,
**dadurch gekennzeichnet**, daß der Hochspannungsleiter (2, 33) hohl ausgebildet ist und jeweils zwei diametral einander gegenüberliegende Bohrungen (34, 35) aufweist, und daß die jeweilige Hülse (37) jeweils eine erste der Bohrungen (34) durchsetzt und die zweite Bohrung (35) wenigstens teilweise durchsetzt.

3. Gekapselte elektrische Hochspannungsleitung nach Anspruch 2,
**dadurch gekennzeichnet**, daß die jeweils zweite Bohrung eine Sackbohrung ist.

4. Gekapselte elektrische Hochspannungsleitung nach Anspruch 1 oder einem der folgenden,
**dadurch gekennzeichnet**, daß der Anschlag jeweils durch einen Boden (18) der jeweiligen Hülse (9) gebildet ist.

5. Gekapselte elektrische Hochspannungsleitung nach Anspruch 4,
**dadurch gekennzeichnet**, daß das Isolierstoffteil (6, 7, 8) am Boden der jeweiligen Hülse (9, 10, 11) unter Zwischenlage eines Federelementes (19) abgestützt ist.

6. Gekapselte elektrische Hochspannungsleitung nach Anspruch 1 oder einem der folgenden,
**dadurch gekennzeichnet**, daß das der Kapselungswand zugewandte Ende des Stützelementes (3, 4, 5, 30, 36, 44) einen elektrisch leitenden, geerdeten Fuß (20, 21, 22, 29, 42) aufweist, der gleitend an der Kapselungswand anliegt.

7. Gekapselte elektrische Hochspannungsleitung nach Anspruch 6,
**dadurch gekennzeichnet**, daß das Isolierstoffteil jeweils unter Zwischenlage eines Federelementes auf einem Gleitplättchen (32) abgestützt ist.

## Claims

1. Enclosed electrical high-voltage line having an electrical high-voltage conductor (2, 33), which is supported inside an enclosure by means of one or more supporting elements (3, 4, 5, 30, 36, 44) each having at least one insulating portion (6, 7, 8, 31, 39, 50), and which has at least one bore for receiving one end of a supporting element (3, 4, 5, 30, 36, 44), with at least one supporting element (3, 4, 5, 30, 36, 44) having a metallic sleeve (9, 10, 11, 27, 37, 47), which penetrates the bore (12, 13, 14, 28, 31, 35, 48) at least partially, is supported in the region of the edge of the bore (12, 13, 14, 28, 31, 35, 48), surrounds a portion of the insulating portion (6, 7, 8, 31, 39, 50) and forms in its interior a limit stop (40), which delimits a shifting of the insulating portion (6, 7, 8, 31, 39, 50) into the bore (12, 13, 14, 28, 31, 35, 48), and with the sleeve (9, 10, 11, 27, 37, 47) being in each case cylindrical in construction, surrounding partially a portion of the insulating body (6, 7, 8, 31, 39, 50) that protrudes from the outer surface of the high-voltage conductor (2, 33) and having there a field-control electrode (15, 16, 17, 38), which surrounds concentrically the respective insulating portion (6, 7, 8, 31, 39, 50), characterised in that the sleeve (9, 10, 11, 27, 37, 47) rests partially directly against the insulating portion (6, 7, 8, 31, 39, 50) and is enlarged in the region of the field-control electrode (15, 16, 17, 38), so that the field-control electrode (15, 16, 17, 38) surrounds the insulating portion (6, 7, 8, 31, 39, 50) at a distance.

2. Enclosed electrical high-voltage line according to claim 1, characterised in that the high-voltage conductor (2, 33) is hollow in construction and has in each case two diametrically opposed bores (34, 35), and in that the respective sleeve (37) in each case penetrates a first bore (34) and penetrates the second bore (35) at least partially.

3. Enclosed electrical high-voltage line according to claim 2, characterised in that the respective second bore is a blind bore.

4. Enclosed electrical high-voltage line according to claim 1 or one of the following, characterised in that the limit stop is formed in each case by a base (18) of the respective sleeve (9).

5. Enclosed electrical high-voltage line according to claim 4, characterised in that the insulating portion (6, 7, 8) is supported on the base of the respective sleeve (9, 10, 11) with interposition of a spring element (19).

6. Enclosed electrical high-voltage line according to claim 1 or one of the following, characterised in that the end of the supporting element (3, 4, 5, 30, 36, 44) that faces the enclosure wall has an electrically conductive, earthed foot (20, 21, 22, 29, 42), which rests in a sliding manner on the enclosure wall.

7. Enclosed electrical high-voltage line according to claim 6, characterised in that the insulating portion is supported on a small sliding plate (32), in each case with interposition of a spring element.

## Revendications

1. Conducteur électrique blindé haute tension, comportant un conducteur (2,33) électrique haute tension, qui est soutenu à l'intérieur d'un blindage au moyen d'un élément ou de plusieurs éléments (3,4,5,30,36,44) de soutien comportant chacun au moins une pièce (6,7,8,31,39,50) en matériau isolant et qui comporte au moins un perçage pour recevoir une extrémité d'un élément (3,4,5,30,36,44) de soutien, au moins un élément (3,4,5,30,36,44) de soutien comportant une douille (9,10,11,27,37,47) métallique qui passe au moins partiellement dans le perçage (12,13,14,28,31,35,48), est soutenue dans la zone du bord du perçage (12,13,14,28,31,35,48), entoure une partie de la pièce (6,7,8,31,39,50) en matériau isolant et forme à l'intérieur une butée (40) qui limite vers l'intérieur un coulissement de la pièce (6,7,8,31,39,50) isolante dans le perçage (12,13,14,28,31,35,48), et la douille (9,10,11,27,37,47) étant conformée de manière cylindrique, entourant partiellement une partie de l'élément (6,7,8,31,39,50) en matériau isolant faisant saillie de la surface extérieure du conducteur (2,33) haute tension et y comportant une électrode (15,16,17,38) de commande de champ, qui entoure concentriquement la pièce (6,7,8,31,39,50) en matériau isolant associée, caractérisé en ce que la douille (9,10,11,27,37,47) est partiellement directement en contact avec la pièce (6,7,8,31,39,50) en matériau isolant et est élargie dans la zone de l'électrode (15,16,17,38) de commande de champ, si bien que l'électrode (15,16,17,38) de commande de champ entoure la pièce (6,7,8,31,39,50) en matériau isolant en en étant distante.

2. Ligne électrique blindée haute tension suivant la revendication 1, caractérisée en ce que le conducteur (2,33) haute tension est réalisé de manière creuse et comporte deux perçages (34,35) diamétralement opposés et en ce que la douille (37) associée passe dans un premier des perçages (34) et passe au moins partiellement dans le deuxième perçage (35).

3. Ligne électrique blindée haute tension suivant la revendication 2, caractérisée en ce que le deuxième perçage est un trou borgne.

4. Ligne électrique blindée haute tension suivant la revendication 1 ou l'une des suivantes, caractérisée en ce que la butée est formée par un fond (18) de la douille (9) associée.

5. Ligne électrique blindée haute tension suivant la revendication 4, caractérisée en ce que la pièce (6,7,8) en matériau isolant prend appui sur le fond de la douille (9,10,11) associée, avec interposition d'un élément (19) élastique.

6. Ligne électrique blindée haute tension suivant la revendication 1 ou l'une des suivantes, caractérisée en ce que l'extrémité de l'élément (3,4,5,30,36,44) de soutien tournée vers la paroi de blindage comporte une embase (20,21,22,29,42) conductrice de l'électricité, mise à la terre, qui est en contact glissant avec la paroi de blindage.

7. Ligne électrique blindée haute tension suivant la revendication 6, caractérisée en ce que la pièce en matériau isolant est soutenue avec interposition d'un élément élastique placé sur une petite plaque (32) lisse.
